# EUROPÄISCHE PATENTSCHRIFT

(11) **EP 2 930 049 B1**
(45) Veröffentlichungstag und Bekanntmachung des Hinweises auf die Patenterteilung: **06.12.2017**
(21) Anmeldenummer: 14163885.8
(22) Anmeldetag: 08.04.2014
(51) Int. Cl.: B60K 37/06, G06F 3/0482, H04M 1/725, G06F 3/0481, G06F 3/0488

(54) **Anwenderschnittstelle und Verfahren zur Anpassung einer Ansicht auf einer Anzeigeeinheit**
User interface and method for adapting a view on a display unit
Interface utilisateur et procédé d'adaptation d'une vue sur une unité d'affichage

(43) Veröffentlichungstag der Anmeldung: 14.10.2015
(73) Patentinhaber: Volkswagen Aktiengesellschaft, 38440 Wolfsburg (DE)
(72) Erfinder: Wild, Holger, 10179 Berlin (DE); Czelnik, Mark Peter, 38440 Wolfsburg (DE)

(56) Entgegenhaltungen:
- FR-A1- 2 937 916

## Beschreibung

### Stand der Technik

Die vorliegende Erfindung betrifft eine Anwenderschnittstelle sowie ein Verfahren zur Anpassung einer Ansicht auf einer Anzeigeeinheit einer Anwenderschnittstelle. Insbesondere betrifft die vorliegende Erfindung eine Individualisierung eines sog. "Homescreens" auf dem Betriebssystem eines mobilen elektronischen Gerätes oder auf einer Anwenderschnittstelle eines Fortbewegungsmittels.

Für die Bedienung unterschiedlichster Betriebssysteme haben sich graphische Anwenderschnittstellen durchgesetzt. Um eine Individualisierung angezeigter Informationen an die Bedürfnisse des jeweiligen Anwenders zu ermöglichen, ist es üblich, sog. Homescreens, auf welchen Kacheln zu jeweiligen Funktionsumfängen dargestellt werden, durch den Anwender anzupassen. Hierbei weist der Anwender einer jeweiligen Kachel einen gewünschten Informationsumfang zu, indem er beispielsweise aus einer Liste einen Eintrag auswählt, dessen korrespondierender Funktionsumfang anschließend mit der Kachel assoziiert wird.

WO 2010/134718 A2 zeigt ein Verfahren zum Anpassen von Homescreens eines mobilen Anwender-Endgerätes. Hierbei wird durch unterschiedliche Gesten eine Kachel einem Homescreen zugeordnet bzw. von einem ersten Homescreen auf einen zweiten Homescreen verschoben.

DE 10 2005 048 230 A1 zeigt eine Eingabevorrichtung für eine Anwenderschnittstelle eines Kraftfahrzeugs, bei welcher in Abhängigkeit einer Dauer einer Eingabegeste eine praktisch unterschiedliche Rückmeldung ausgegeben wird.

DE 10 2009 048 823 A1 offenbart ein Verfahren zur Rückmeldung eines seit dem Beginn einer Eingabe abgelaufenen Zeitintervalls, bei welchem eine den Rand eines Symbols allmählich umlaufende Markierung ein Maß für den zunehmenden Zeitverlauf darstellt.

### Das gattungsbildende Dokument

FR 2 937 916 A1 schließlich schlägt eine Bedienoberfläche für ein Fahrzeug vor, wobei ein berührungsempfindlicher Bildschirm mit einer Tastatur gekoppelt ist. Mittels Tasten der Tastatur kann eine direkte Umschaltung zu bestimmten Menüs durchgeführt werden.

Ausgehend vom vorgenannten Stand der Technik ist es eine Aufgabe der vorliegenden Erfindung, eine Anpassung einer Ansicht auf einer Anzeigeeinheit einer Anwenderschnittstelle komfortabler zu gestalten und übersichtlicher durchzuführen.

### Offenbarung der Erfindung

Die vorstehend genannte Aufgabe wird erfindungsgemäß durch ein Verfahren mit den Merkmalen gemäß Anspruch 1 sowie durch eine Anwenderschnittstelle mit den Merkmalen gemäß Anspruch 11 gelöst. Das erfindungsgemäße Verfahren dient der Anpassung einer Ansicht auf einer Anzeigeeinheit einer Anwenderschnittstelle. Die Anwenderschnittstelle kann beispielsweise in einem mobilen elektronischen Gerät oder in einem Fortbewegungsmittel angeordnet sein. Über die Anwenderschnittstelle können Eingaben und Ausgaben getätigt werden und somit eine Vielzahl von Funktionen des elektronischen Gerätes bzw. des Fortbewegungsmittels bedient werden. Die Anzeigeeinheit kann als Matrixanzeige zur Darstellung eines wahlfreien Inhaltes ausgestaltet sein. Zunächst wird ein Konfigurationsmodus für eine Zuweisung eines Informationsumfangs zu einer auf der Anzeigeeinheit dargestellten Kachel aufgerufen. Der Konfigurationsmodus dient zur Individualisierung der Inhalte der dargestellten Kachel. Unter einer "Kachel" wird im Rahmen der vorliegenden Erfindung ein Anzeigeelement verstanden, welches einen räumlich begrenzten Anzeigebereich kennzeichnet, auf welchen für einen vorbestimmten Funktionsumfang Informationen dargestellt werden. Insbesondere ist eine "Kachel" zunächst nur zur Anzeige von Informationen vorgesehen, ohne dass einzelne Funktionen des Funktionsumfangs aus der Kachel selbst heraus gestartet werden können. Optional kann eine Bedieninteraktion mit der Kachel dazu führen, dass korrespondierende Funktionen in einer anderen Ansicht dargestellt und anschließend bedient werden können. Die Kachel kann Bestandteil eines Homescreens sein, auf welchem eine Vielzahl unterschiedlicher Funktionsumfänge in Form von Kacheln optisch wiedergegeben wird. Zur Zuweisung eines neuen Funktionsumfangs zu einer auf der Anzeigeeinheit dargestellten Kachel wird eine Vielzahl erster Bedienflächen angezeigt, welche jeweils einen anderen Funktionsumfang repräsentieren. Mit anderen Worten ist die Vielzahl erster Bedienflächen einer Auswahlmöglichkeit verfügbarer Funktionsumfänge. Die ersten Bedienflächen können beispielsweise als Hauptkategorien unterschiedlicher Funktionen eines Fahrzeugs ausgestaltet sein. Durch den Empfang einer ersten Anwendereingabe bezüglich der ersten Bedienfläche wird erfindungsgemäß eine zweite Vielzahl der ersten Bedienfläche thematisch zugeordneter zweiter Bedienflächen angezeigt, welche beispielsweise als Unterkategorie der Funktion der ersten Bedienfläche verstanden werden können. Die erste Vielzahl erster Bedienflächen kann bevorzugt als verschiebliches Band benachbarter Bedienflächen ausgestaltet sein, welches im Ansprechen auf die erste Anwendereingabe um die zweite Vielzahl der zweiten Bedienflächen erweitert wird. Im Falle eines Bandes können zwei benachbarte Bedienflächen der ersten Vielzahl von Bedienflächen auseinandergeschoben werden, so dass zwischen den beiden ersten Bedienflächen Platz zur Anzeige der zweiten Bedienflächen ist. Auf diese Weise können auch große Funktionsumfänge bzw. viele Funktionen übersichtlich und komfortabel auswählbar gruppiert werden und hierarchisch gegliedert zur Konfiguration einer Kachel ausgewählt werden. Auf diese Weise verringert sich die Dauer, in welcher der Anwender mit der Konfiguration der Anwenderschnittstelle verbringt. Dies ermöglicht eine raschere Verdunklung der Anzeigeeinheit nach Abschluss der erfolgreichen Konfiguration, so dass im Falle eines mobilen Anwender-Endgerätes die Energiereserven des Akkumulators weniger in Anspruch genommen werden. Am Beispiel eines Fortbewegungsmittels ergibt sich der Vorteil einer kürzeren Ablenkung des Anwenders vom Straßenverkehr, wodurch die Verkehrssicherheit eines erfindungsgemäß ausgestatteten Fortbewegungsmittels erhöht wird.

Die Unteransprüche zeigen bevorzugte Weiterbildungen der Erfindung.

Bevorzugt wird eine zweite Anwendereingabe bezüglich einer ersten Bedienfläche oder einer zweiten Bedienfläche empfangen und im Ansprechen darauf ein den Bedienflächen jeweils zugeordneter Funktionsumfang der zu konfigurierenden Kachel zugewiesen. Je nach dem, ob die Kachel zuvor mit der Vielzahl angezeigter Bedienflächen assoziiert worden ist ("den Fokus erhalten hat") oder eine solche Zuweisung noch nicht erfolgt ist, kann die zweite Anwendereingabe eine Tippgeste oder eine "Ziehen und Fallenlassen"-Geste (englisch: drag and drop-gesture) umfassen. Mit anderen Worten führt die zweite Anwendereingabe zu einer Bestätigung einer angezeigten Bedienfläche für die Zuweisung eines mit ihr assoziierten Funktionsumfangs zu einer Kachel. Auf diese Weise wird die Zuweisung des Funktionsumfangs noch intuitiver möglich.

Um dem Anwender bei der Interaktion mit der ersten oder der zweiten Bedienfläche einen Hinweis darauf zu geben, welche Auswirkung seine Auswahl bzw. Zuweisung haben wird, kann diejenige Position auf der Anzeigeeinheit gekennzeichnet werden, welcher der Funktionsumfang durch eine Bestätigung zugewiesen würde. Dies kann im Ansprechen auf eine Tippgeste, auf eine erste oder zweite Bedienfläche erfolgen. Alternativ oder zusätzlich kann die Position eine oder mehrere Kacheln umfassen, welche durch eine Ziehen- und Fallenlassen-Geste mit dem Funktionsumfang assoziiert werden soll bzw. sollen. Die Position kann beispielsweise mit einem teilweise transparenten Farbfeld überlagert werden bzw. entsprechend getönt werden. Alternativ oder zusätzlich kann die Position durch einen Rahmen umrandet und dadurch optisch hervorgehoben werden. Alternativ oder zusätzlich können auch andere Farbeinstellungen der Position derart angepasst werden, dass sie sich von außerhalb der Position befindlichen Bereichen der Anzeigeeinheit (z.B. übrige Kacheln) unterscheiden. Auf diese Weise wird dem Anwender bereits vor Abschluss bzw. Bestätigung der Zuweisung veranschaulicht, welche Auswirkung sein aktueller Bedienschritt haben könnte. Ab diesem Zeitpunkt kann eine Bestätigung erfolgen, ohne dass der Anwender die Anzeigeeinheit hierbei fokussieren muss. Auf diese Weise kann er sich anderen Aufgaben zuwenden und die Bestätigung der Zuweisung sozusagen "blind" vornehmen.

Die erste Anwendereingabe zur Anzeige der zweiten Vielfalt zweiter Bedienflächen und/oder die zweite Anwendereingabe zur Zuweisung des Funktionsumfangs zu der Kachel bzw. zu den Kacheln kann eine Tippgeste und/oder eine Ziehen- und Fallenlassen-Geste und/oder eine Zwei-Finger-Zoom-Geste umfassen. Letztere Geste wird im Englischen auch als "pinch" bzw. spread-Geste" (je nach Relativbewegung der Finger) bezeichnet, bei welcher zwei Finger unter Kontakt mit einer Eingabeeinheit (z.B. Oberfläche eines berührungsempfindlichen Anzeigeelementes) auf einander zubewegt oder voneinander entfernt werden. Beispielsweise kann zwischen der ersten Bedienfläche und einer benachbarten ersten Bedienfläche durch eine spread-Geste die zweite Vielzahl zweiter Bedienflächen zum Vorschein gebracht werden. Auf diese Weise ist ein Verschieben der ersten Bedienflächen ("scrollen" mittels eines Fingers) deutlich unterscheidbar von dem Anwenderwunsch, die zweite Vielzahl Bedienflächen darzustellen. Entsprechend umgekehrt kann die zweite Vielzahl Bedienflächen im Ansprechen auf eine pinch-Geste "eingefahren" oder "eingeklappt" werden, wonach ausschließlich erste Bedienflächen angezeigt werden. Die Verwendung einer solchen Zwei-Finger-Geste vermeidet die Notwendigkeit, eine gegebenenfalls auf der ersten Bedienfläche angeordnete Schaltfläche zum Ausfahren der zweiten Vielzahl zweiter Bedienflächen exakt treffen zu müssen. Dies kann insbesondere bei der mobilen Verwendung der erfindungsgemäßen Anwenderschnittstelle von Vorteil sein.

Die erste Vielzahl erster Bedienflächen kann im Ansprechen auf eine vordefinierte vierte Anwendereingabe angezeigt werden, welche sich z.B. auf die erste Kachel beziehen kann. Beispielsweise kann eine auf der ersten Kachel ausgeführte Tippgeste die erste Vielzahl erster Bedienflächen zum Vorschein bringen, wobei die erste Kachel automatisch mit der ersten Vielzahl erster Bedienflächen assoziiert ist und zumindest bezüglich einzelner Gesten (z.B. Tippgeste auf eine erste Bedienfläche) als eine vordefinierte (Ziel-) Position mit Eingabefokus fungiert. Auch eine Langdruck- (englisch "longpress")Geste auf eine erste Kachel ist als vierte Anwendereingabe möglich, um die erste Vielzahl erster Bedienflächen darzustellen. Unabhängig von einer vorbestimmten Kachel kann auch eine Wischgeste verwendet werden, um die erste Vielzahl erster Bedienflächen anzuzeigen. Eine solche Wischgeste kann beispielsweise im Konfigurationsmodus derart vordefiniert sein, dass von einem Rand der Anzeigeeinheit eine in Richtung der Anzeigemitte gerichtete Wischgeste ausgeführt wird. Auf diese Weise kann auch die Position der ersten Vielzahl erster Bedienflächen bestimmt werden, indem jeweils entlang des Randes, von welchem aus die Wischgeste gestartet wurde, die erste Vielzahl erster Bedienflächen eingeschoben wird. In Abhängigkeit der Kachel bzw. der Position, welcher der Funktionsumfang zugewiesen werden soll, kann somit eine geeignete Position für die erste Vielzahl erster Bedienflächen gewählt werden. Dies erhöht die Bedienergonomie bei der Zuweisung eines Funktionsumfangs zu einer Kachel.

Die Kachel kann Bestandteil eines sog. "Homescreens" sein. Als "Homescreen" wird eine insbesondere frei konfigurierbare Bildschirmansicht verstanden, in welcher der Anwender eine Übersicht der (für ihn) wichtigsten Funktionsumfänge bzw. Betriebskenngrößen erhält. Eine Anwenderschnittstelle kann beispielsweise mehrere Homescreens aufweisen, zwischen welchen der Anwender je nach Bedarf zur Anzeige unterschiedlicher Informationsübersichten wählen kann. Die Funktionsumfänge der ersten Vielzahl Bedienflächen können aus den Bereichen "Musikwiedergabe", "Routenführung", "Klimabedienung" und/oder Informationswiedergabe zu Reisestatistiken (auch "Bord-Computer" genannt) stammen. Dem Bereich der Musikwiedergabe können zweite Bedienflächen aus den Bereichen "aktueller Titel", "aktueller Interpret", "aktuelles Album", "verfügbare Quellen", "Einkauf zusätzlicher Titel", etc., als Unterkategorien zugeordnet sein. Dem Bereich "Routenführung" können zweite Bedienflächen repräsentierend Funktionsumfänge aus den Bereichen "aktuelle Position", "sehenswerte Punkte in der Umgebung (englisch: points of interest)", "Zieleingabe", "Verkehrsmeldungen", etc., zugeordnet sein. Dem Funktionsumfang "Klimabedienung" können zweite Bedienflächen zu Funktionsumfängen aus den Bereichen "Wärmequellen", "Lüfterstufen", "Sitzheizung", "Lenkradheizung", Luftstromverteilung", etc., zugeordnet sein. Dem Bereich "Bordcomputer" können zweite Bedienflächen zu Funktionsumfängen aus den Bereichen "verbleibende Reichweite", "gefahrene Kilometer", "erwartete Ankunftszeit", "Durchschnittsgeschwindigkeit", "Durchschnittsverbrauch", etc., zugeordnet sein. Allein die Vielfalt möglicher zweiter Bedienflächen zu vier ersten Bedienflächen zeigt das Ordnungspotential der vorliegenden Erfindung.

Gemäß einem zweiten Aspekt der vorliegenden Erfindung wird eine Anwenderschnittstelle mit einer Anzeigeeinheit, einer Verarbeitungseinheit und einer Eingabeeinheit vorgeschlagen. Die Anzeigeeinheit kann als matrixförmiges Bildschirmelement zur Anzeige wahlfreier Inhalte ausgestaltet sein. Die Verarbeitungseinheit kann einen programmierbaren Prozessor (z.B. Mikrocontroller oder Nanocontroller) und/oder eine Graphikkarte umfassen. Die Eingabeeinheit sind zur Entgegennahme von Anwendereingaben eingerichtet und können eine im Wesentlichen transparente Oberfläche auf der Anzeigeeinheit nach Art eines Touchscreens umfassen. Die vorgenannten Merkmale richten die erfindungsgemäße Anwenderschnittstelle ein, ein Verfahren gemäß einem der vorstehenden Ansprüche durchzuführen. Die Merkmale, Merkmalskombinationen und die sich aus diesen ergebenden Vorteile entsprechen den in Verbindung mit dem erstgenannten Erfindungsaspekt ausgeführten derart ersichtlich, dass zur Vermeidung von Wiederholungen auf die obigen Ausführungen verwiesen wird.

Bevorzugt ist die Anwenderschnittstelle eingerichtet, dauerhaft in ein Fortbewegungsmittel integriert zu werden. Beispielsweise kann hierzu die Anzeigeeinheit als in einem Armaturenbrett des Fortbewegungsmittels eingelassene Komponente ausgeführt sein. Die Verarbeitungseinheit kann ein Steuergerät darstellen, welches optional Funktionsumfänge aus anderen Bereichen des Fortbewegungsmittels ausführt. Auf diese Weise können die in Hardware vorgehaltenen Ressourcen gemeinsam verwendet und somit besser/gleichmäßiger ausgelastet werden. Beispielsweise kann die Anwenderschnittstelle auch Sensorsignale von Sensoren des Fortbewegungsmittels erhalten und im Ansprechen auf diese eine Darstellung von Informationen auf einer Kachel eines Homescreens veranlassen bzw. verändern. Die Anwendung des erfindungsgemäßen Verfahrens bzw. die Verwendung einer erfindungsgemäßen Anwenderschnittstelle in einem Fortbewegungsmittel hat insbesondere den Vorteil, dass die Fahrzeugführung durch eine ergonomischere Bedienung der Anwenderschnittstelle während der Fahrt sicherer wird.

Gemäß einem dritten Erfindungsaspekt wird ein Computerprogrammprodukt (z.B. ein Datenspeicher) vorgeschlagen, auf welchen Instruktionen gespeichert sind, die einen programmierbaren Prozessor in die Lage versetzen, die Schritte eines Verfahrens gemäß dem erstgenannten Erfindungsaspekt durchzuführen. Das Computerprogrammprodukt kann als CD, DVD, Blueray-Disc, Flash-Speicher, Festplatte, RAM-ROM, Cache, etc., ausgestaltet sein.

Gemäß einem vierten Aspekt der vorliegenden Erfindung wird eine Signalfolge vorgeschlagen, welche Instruktionen repräsentiert, welche einen programmierbaren Prozessor in die Lage versetzen, die Schritte eines Verfahrens gemäß dem erstgenannten Erfindungsaspekt durchzuführen. Auf diese Weise wird auch die informationstechnische Bereitstellung der Instruktionen für denjenigen Fall unter Schutz gestellt, dass sich die hierzu erforderlichen Speichermittel außerhalb des Geltungsbereichs der beigefügten Ansprüche befinden.

Gemäß einem fünften Aspekt der vorliegenden Erfindung wird ein Anwender-Endgerät vorgeschlagen, welches insbesondere als Datenverarbeitungseinrichtung, bevorzugt als mobiles Drahtloskommunikationsgerät, ausgestaltet sein kann. Das Anwender-Endgerät umfasst eine Anwenderschnittstelle, wie sie in Verbindung mit dem zweitgenannten Erfindungsaspekt im Detail beschrieben worden ist. Auch hinsichtlich der Merkmale und Vorteile des erfindungsgemäßen Anwender-Endgerätes wird auf die obigen Ausführungen verwiesen.

Gemäß einem sechsten Aspekt der vorliegenden Erfindung wird ein Fortbewegungsmittel vorgeschlagen, welches insbesondere als Fahrzeug ausgestaltet sein kann. Das Fortbewegungsmittel kann ein PKW, ein Transporter, ein LKW, ein Wasser- und/oder Luftfahrzeug, sein. Erfindungsgemäß ist eine Anwenderschnittstelle zur Bedienung des Fortbewegungsmittels vorgesehen, wie sie in Verbindung mit dem zweitgenannten Erfindungsaspekt im Detail beschrieben worden ist. Die Merkmale und Vorteile ergeben sich entsprechend.

### Kurze Beschreibung der Zeichnungen

Nachfolgend werden Ausführungsbeispiele der Erfindung unter Bezugnahme auf die begleitenden Zeichnungen im Detail beschrieben. In den Zeichnungen ist:
- Figur 1: eine schematische Ansicht von Komponenten eines Ausführungsbeispiels einer erfindungsgemäßen Anwenderschnittstelle in einem Ausführungsbeispiel eines erfindungsgemäßen Fortbewegungsmittels;
- Figur 2: eine schematische Ansicht von Komponenten eines Ausführungsbeispiels einer erfindungsgemäßen Anwenderschnittstelle in einem Ausführungsbeispiel eines erfindungsgemäßen Anwender-Endgerätes;
- Figuren 3 bis 14: Bedienschritte bei der Bedienung eines Konfigurationsmodus eines Ausführungsbeispiels einer erfindungsgemäßen Anwenderschnittstelle;
- Figur 15: eine alternative Bildschirmdarstellung in einem Konfigurationsmodus eines Ausführungsbeispiels einer erfindungsgemäßen Anwenderschnittstelle;
- Figur 16: eine alternative Bildschirmdarstellung in einem Konfigurationsmodus eines Ausführungsbeispiels einer erfindungsgemäßen Anwenderschnittstelle;
- Figur 17: ein Ausführungsbeispiel eines Bedienschrittes zum Beenden des Konfigurationsmodus eines Ausführungsbeispiels einer erfindungsgemäßen Anwenderschnittstelle;
- Figur 18: eine Bildschirmansicht nach dem Verlassen eines Konfigurationsmodus eines Ausführungsbeispiels einer erfindungsgemäßen Anwenderschnittstelle; und
- Figur 19: ein Flussdiagramm veranschaulichend Schritte eines Ausführungsbeispiels eines erfindungsgemäßen Verfahrens.

Die in den Figuren enthaltenen englischsprachigen Wörter stellen in dieser Anmeldung graphische Symbole dar.

### Ausführungsformen der Erfindung

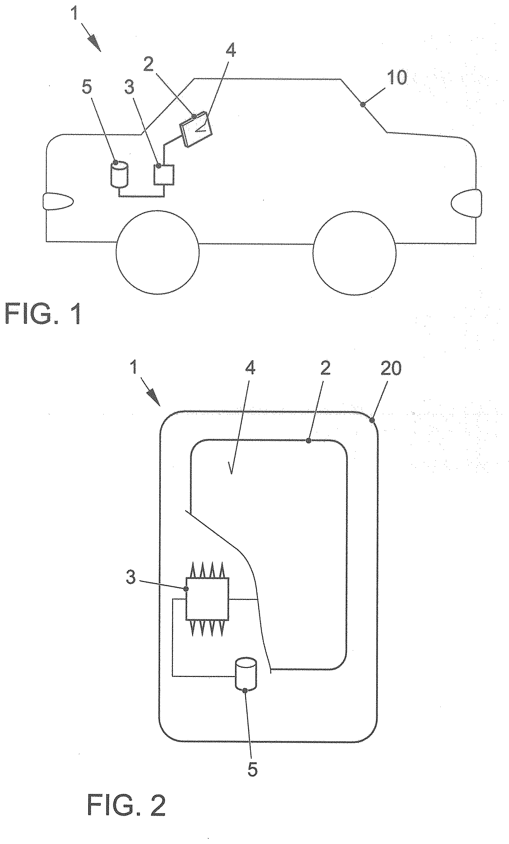

Figur 1 zeigt ein Ausführungsbeispiel einer erfindungsgemäßen Anwenderschnittstelle 1, welches in einem PKW 10 als Fortbewegungsmittel angeordnet ist. Ein Bildschirm 2 ist als Anzeigeeinheit in das Armaturenbrett des PKWs 10 eingelassen und informationstechnisch mit einem elektronischen Steuergerät 3 verbunden. Die Oberfläche des Bildschirms 2 ist mit einer berührungsempfindlichen, transparenten Oberfläche 4 als Eingabeeinheit versehen, deren Steuersignale ebenfalls an das elektronische Steuergerät 3 geleitet werden. Zur Darstellung wahlfreier Inhalte sowie zur Klassifizierung auf der Oberfläche 4 ausgeführter Gesten des Anwenders ist das elektronische Steuergerät 3 mit einem Datenspeicher 5 informationstechnisch verbunden.

Figur 2 zeigt die Komponenten eines Ausführungsbeispiels einer Anwenderschnittstelle 1 innerhalb eines Tablett-PCs 20 als Anwender-Endgerät. Ein Bildschirm 2 ist mit einer berührungsempfindlichen, transparenten Oberfläche 4 versehen. Beide stehen in kommunikationstechnischer Verbindung mit einem programmierbaren Prozessor 3 als Verarbeitungseinheit. Der programmierbare Prozessor 3 ist weiter mit einem Datenspeicher 5 informationstechnisch verbunden, aus welchem er Informationen zur Klassifizierung von Anwendergesten etc. beziehen kann.

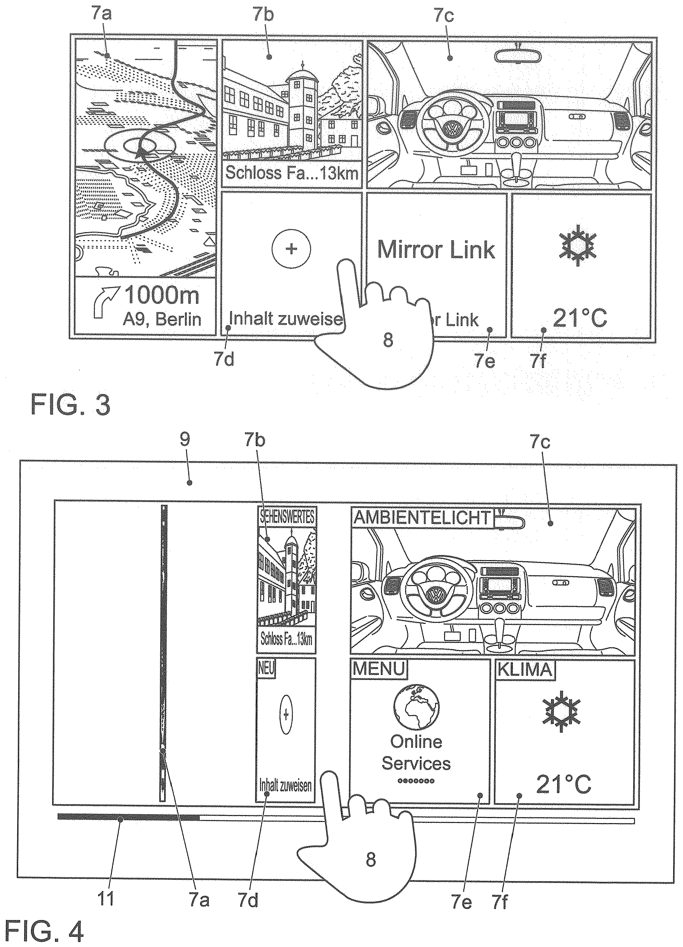

Figur 3 zeigt einen Homescreen als Bildschirminhalt, wie er auf einer Anzeigeeinheit einer erfindungsgemäßen Anwenderschnittstelle angezeigt werden könnte. Sechs Kacheln 7a, 7b, 7c, 7d, 7e, 7f sind nebeneinander bzw. übereinander auf dem Bildschirm dargestellt. Sie dienen der Informationswiedergabe zur Routenführung, zur Fahrzeuginnenbeleuchtung, zur Wiedergabe von Informationen über eine fahrzeugexterne Datenverbindung sowie zur Darstellung einer aktuellen Klimatisierungseinstellung. Eine Kachel 7d weist derzeit keinen eigenen Funktionsumfang auf, weshalb die Hand 8 eines Anwenders diese Kachel durch eine Tippgeste berührt, um ihr einen Inhalt zuzuweisen.

Figur 4 zeigt eine sich im Anschluss an den in Figur 3 dargestellten Bedienschritt anschließende Bildschirmansicht 9 eines Konfigurationsmodus, in welcher die Kacheln 7a-7f in einer zeitlich versetzten Folge von links nach rechts durch eine Rotation um ihre mittlere Hochachse gewendet werden. Hierbei werden die Kacheln 7a-7f etwas verkleinert dargestellt, wobei ein Rahmen 9 den am Rande des Bildschirms frei gewordenen Platz ausfüllt. Dieser Rahmen 9 verdeutlicht den Konfigurationsmodus.

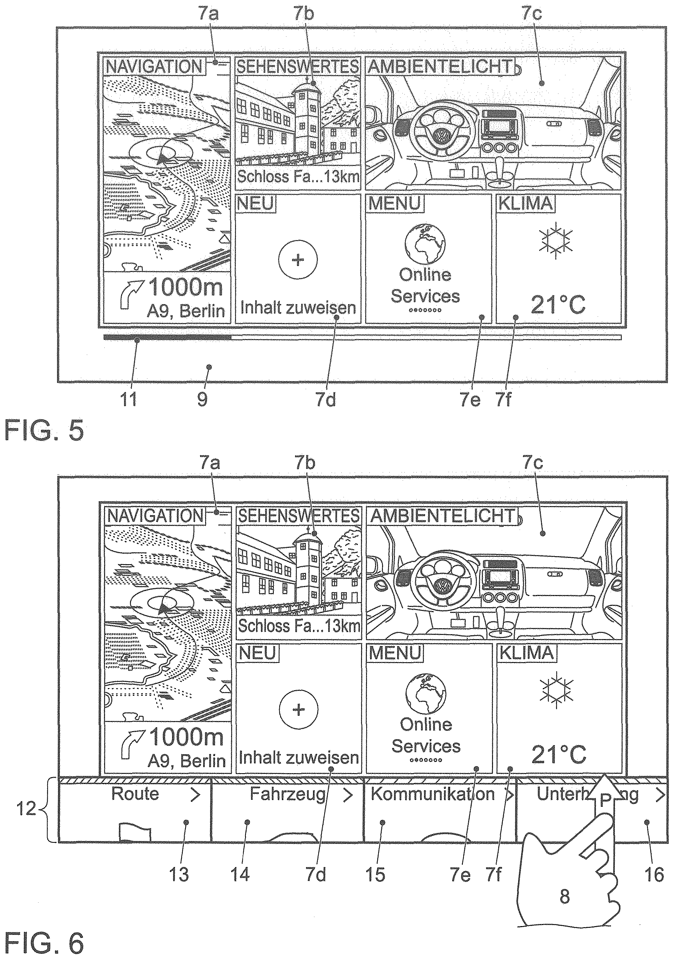

Figur 5 zeigt das Resultat des in Verbindung mit den Figuren 3 und 4 diskutierten Aufrufes des Konfigurationsmodus. Der Rahmen 9 hat seine endgültige Stärke erreicht, die Kacheln 7a-7f sind vollständig gewendet und auf ihre Zielgröße geschrumpft. Ein sog. Scroll-Balken 11 ist unterhalb der Kacheln 7a-7f erschienen, während ein optisch hervorgehobener Bereich anzeigt, dass der dargestellte Homescreen am linken Ende einer Reihung von Homescreens angeordnet ist.

Figur 6 zeigt eine Wischgeste P einer Hand 8 eines Anwenders als vierte Anwendereingabe, welche von einem unteren Rand des Bildschirms in Richtung einer horizontalen Mittellinie des Bildschirms gerichtet ist. Im Ansprechen darauf wird eine erste Vielzahl 12 erster Bedienflächen 13, 14, 15, 16 sichtbar, welche der Geste P folgend eingeschoben wird.

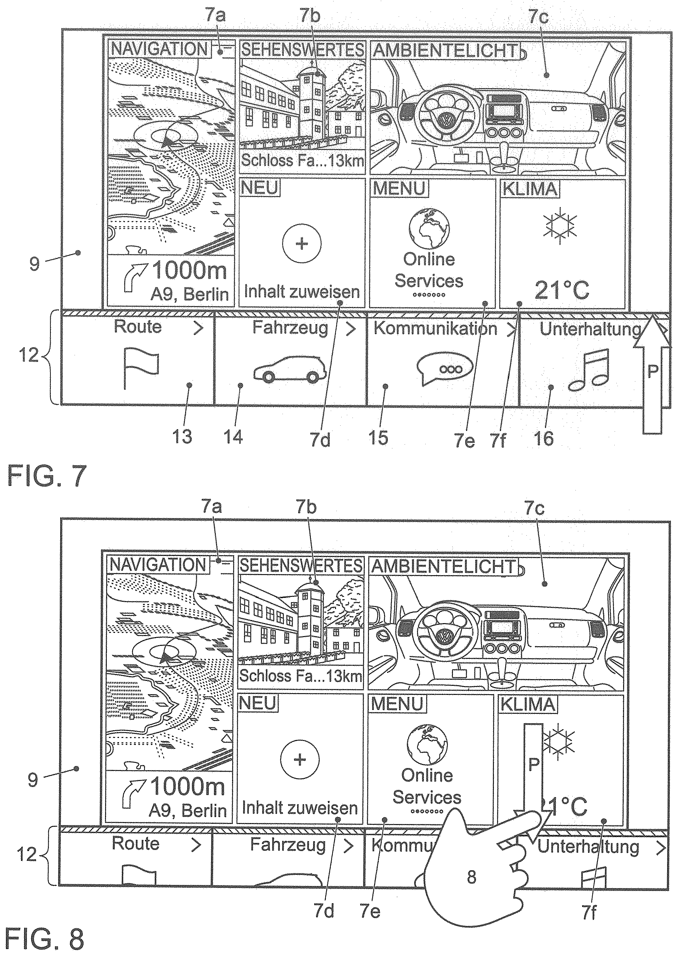

Figur 7 zeigt das Resultat des in Figur 6 gestarteten Aufrufs der Vielzahl 12 der Bedienflächen 13 bis 16. Der oberhalb der Kacheln 7a-7f ehemals befindliche Rand 9 ist geschrumpft, um die Vielzahl 12 der Bedienflächen 13-16 Platz zu machen. Auch unterhalb der Kacheln 7a-7f ist der Rand 9 vollständig durch die Vielzahl 12 der Bedienflächen 13-16 überlagert. Auf diese Weise kann die verkleinerte Größe der Kacheln 7a-7f im Wesentlichen beibehalten werden, obwohl die Vielzahl 12 der Bedienflächen 13-16 nun zusätzlich sichtbar ist.

Figur 8 zeigt eine vertikal nach unten gerichtete Wischgeste P, mittels welcher die Vielzahl 12 der Bedienflächen 13-16 aus dem sichtbaren Bereich geschoben wird. Hierbei folgt die Oberkante der Vielzahl 12 der Wischgeste P, bis eine verkleinerte Darstellung der Bedienflächen 13-16 ohne Graphiksymbole erreicht ist. Der oberhalb der Kacheln 7a-7f ursprünglich vorhandene Rand 9 ist unvollständig wieder hergestellt.

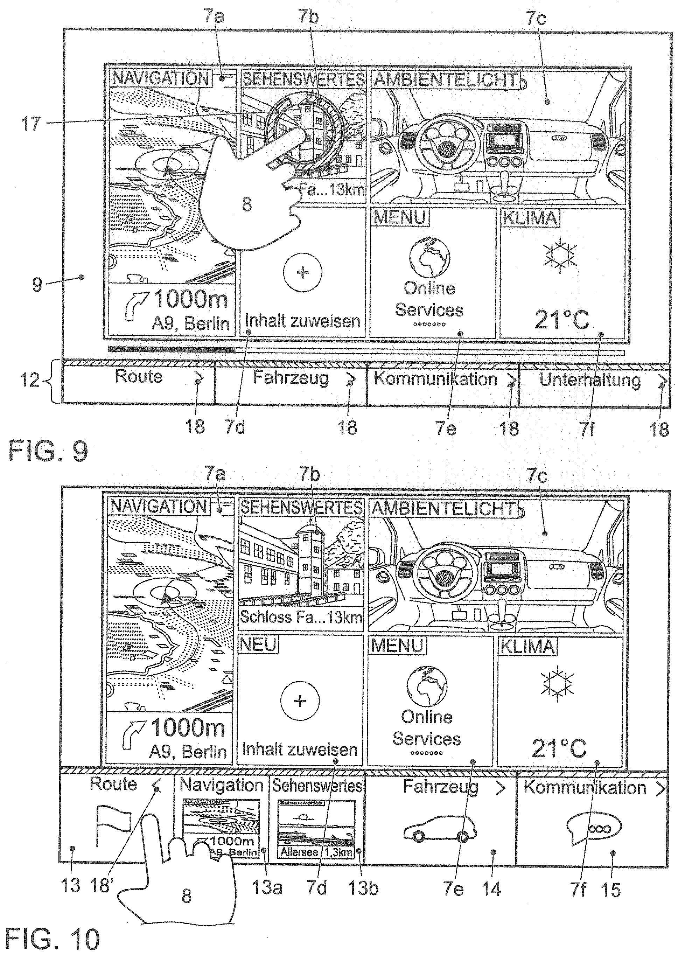

Figur 9 zeigt eine Langdruckgeste der Hand 8 auf der Kachel 7b, während die Vielzahl 12 der Bedienflächen 13-16 in einer verkleinerten Darstellung erscheint. Ein Hinweis 17 veranschaulicht den Zeitverlauf der Langdruckgeste ("longpress-gesture"). Hierbei wird ein erleuchteter Randbereich eines Ringsymbols dem Uhrzeigerrichtung folgend erweitert, bis ein geschlossen erleuchteter Randbereich den Ablauf einer für die Langdruckgeste vordefinierten Zeitdauer anzeigt. Die Bedienflächen 13-16 sind lediglich durch ihren Titel und eine farblich individualisierte Kopfleiste gekennzeichnet. Die ehemals enthaltenen Graphiksymbole sind ausgeblendet worden. Neben den Titeln ist ein jeweiliger Anfasser 18 als Schaltfläche dargestellt, welcher die Möglichkeit signalisiert, Unterkategorien als zweite Bedienflächen aufzurufen.

In Figur 10 führt eine Tippgeste der Hand 8 auf die Bedienfläche 13 zu einem Aufruf mit der Bedienfläche 13 assoziierter zweiter Bedienflächen 13a, 13b. Letztere stellen Unterkategorien der Kategorie "Route" dar und betreffen die Routenführung sowie sehenswerte Punkte in der Umgebung. Im Ansprechen auf das Erscheinen der zweiten Bedienflächen 13a, 13b ist der Anfasser 18' gegenüber den Anfassern 18 in umgekehrte Richtung orientiert. Hierdurch wird dem Anwender angezeigt, dass eine weitere Interaktion mit dem Anfasser 18' zu einem Ausblenden der zweiten Bedienflächen 13a, 13b führt.

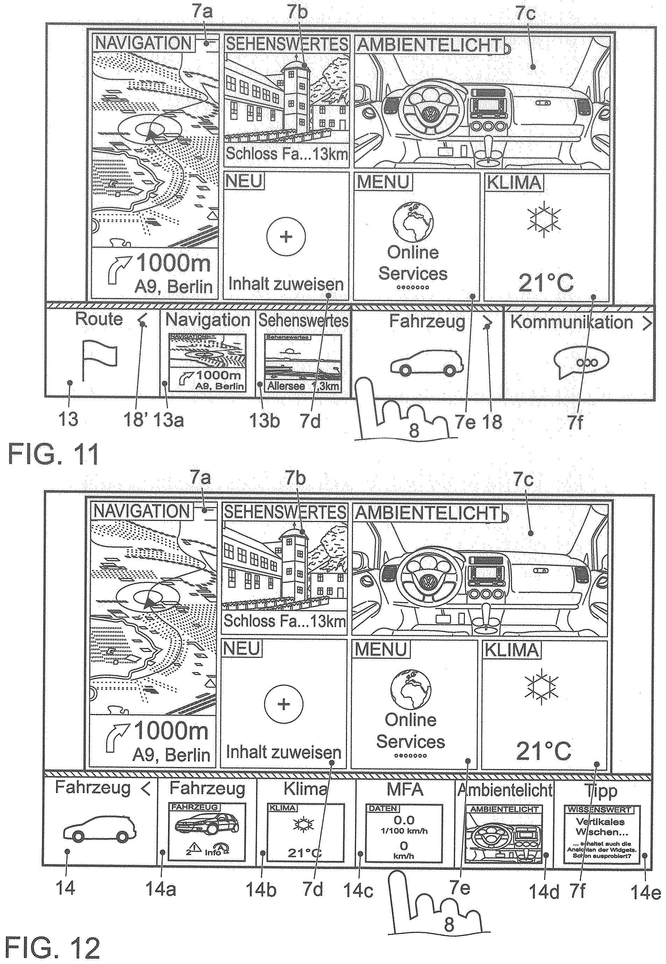

Figur 11 zeigt eine Anwenderinteraktion mit der Bedienfläche 14, im Ansprechen worauf zusätzliche, zweite Bedienflächen eingeblendet werden.

Figur 12 zeigt das Resultat der in Figur 11 dargestellten Anwenderinteraktion, welche ebenfalls als erste Anwendereingabe im Sinne der vorliegenden Erfindung verstanden werden kann. Zusätzlich zur ersten Bedienfläche 14 betreffend Fahrzeugfunktionen sind zweite Bedienflächen 14a-14e erschienen, welche zwischen den ersten Bedienflächen 14 und 15 aufgereiht sind. Sie betreffen eine Übersicht zu Betriebszuständen des Fahrzeugs, Klimaeinstellungen, Durchschnittswerte für Betriebskenngrößen, die Innenraumbeleuchtung und einen Hinweis für die Ausführung geeigneter Anwenderinteraktionen.

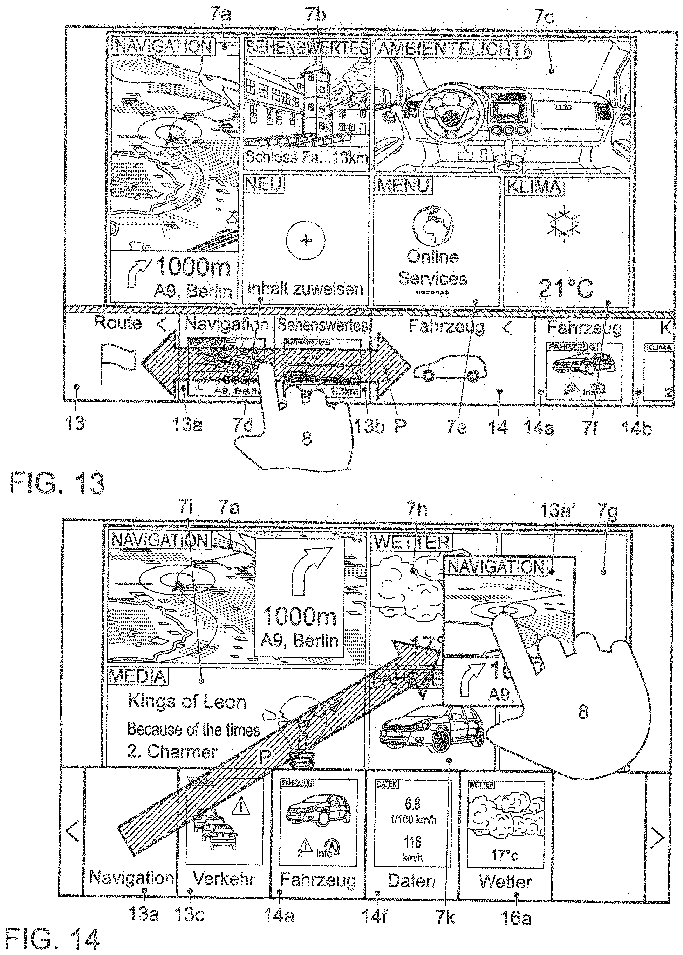

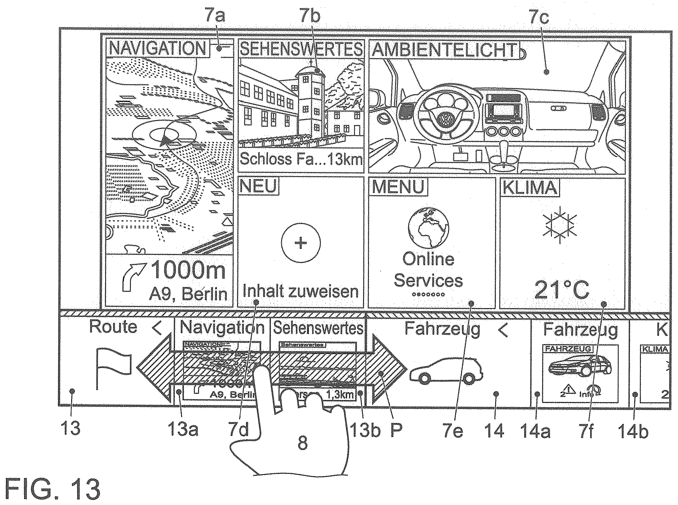

Figur 13 zeigt durch einen horizontalen Doppelpfeil P, wie aktuell nicht im sichtbaren Bereich angeordnete erste Bedienflächen 13-16 bzw. zweite Bedienflächen 13a, 13b, 14a-14e in den sichtbaren Bereich bewegt werden können. Die horizontale Wischgeste entlang des Doppelpfeils P ist eine Ein-Finger-Geste zur Verschiebung sämtlicher Bedienflächen bzw. des gesamten, auch als "Themenband" bezeichneten Funktionsangebotes ausgestaltet. Um eine alternative Geste zum Verbergen der zweiten Bedienflächen 13a, 13b bereitzustellen, kann eine (nicht dargestellte) Zwei-Finger-Geste verwendet werden, bei welcher ein erster Finger auf der ersten Bedienfläche 13 und ein zweiter Finger auf der zweiten Bedienfläche 13b angeordnet werden kann. Werden die Finger entsprechend einer Zoom-Out-Geste zusammengeführt, verschwinden die zweiten Bedienflächen 13a und 13b.

Figur 14 zeigt eine alternative Aufteilung der Fläche eines Homescreens, bei welcher zusätzlich zur Kachel 7a alternative Kacheln 7g, 7h, 7i, 7k im Konfigurationsmodus dargestellt werden. Durch eine Ziehen- bzw. Wischgeste bewegt die Hand 8 des Anwenders eine zweite Bedienfläche 13a betreffend Navigationsinformationen entlang eines Pfeils P in den Bereich einer Kachel 7g. Sobald die der Hand 8 des Anwenders virtuell anhaftende, zweite Bedienfläche 13a an einer Position über der Kachel 7g angelangt ist, wird die Kachel 7g entsprechend der Kategorie "Route" blau eingefärbt, um dem Anwender zu signalisieren, dass ausschließlich die Kachel 7g im Falle eines sofortigen Abhebens der Hand 8 vom Bildschirm den Funktionsumfang der zweiten Bedienfläche 13a erhält. Das Abheben der Hand 8 kann daher als "Fallenlassen" zur Bestätigung der gewünschten Zuweisung verstanden werden.

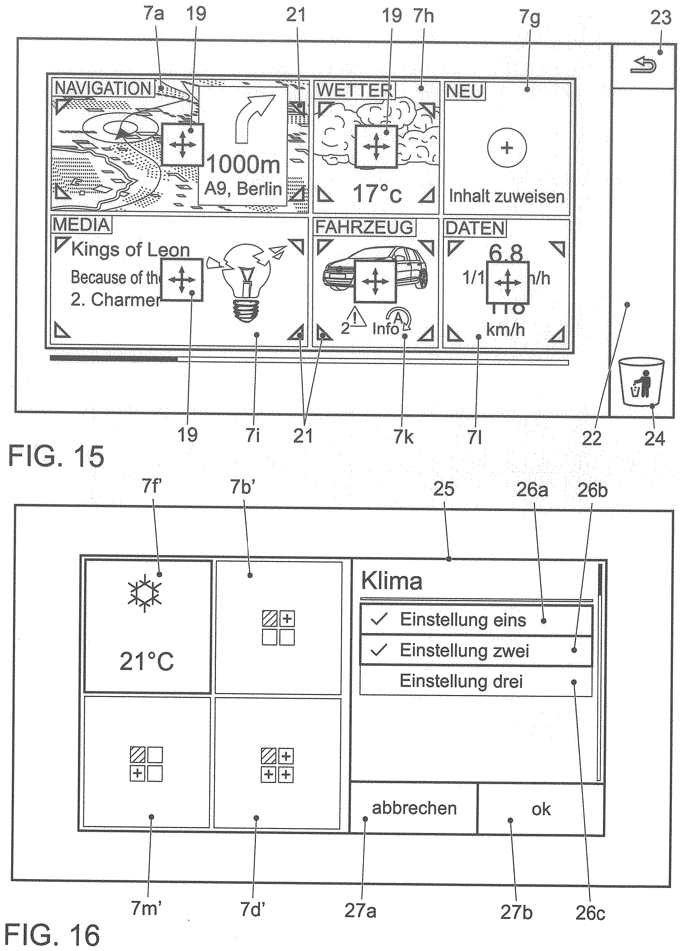

Figur 15 zeigt eine alternative Ansicht eines Konfigurationsmodus einer erfindungsgemäßen Anwenderschnittstelle, in welcher die aktuell vorgesehenen Kacheln 7a, 7g, 7h, 7i, 7k und 7l durch Indikatoren in Form von Pfeilspitzen 19, 21 dem Anwender als bewegbar bzw. verschieblich angezeigt werden. Am rechten Bildschirmrand 22 ist oben eine Schaltfläche 23 zum Widerrufen des zuletzt durchgeführten Bedienschrittes vorgesehen. Unten ist ein Papierkorb 24 zum Entfernen eines Funktionsumfangs von einer Kachel 7a, 7g, 7h, 7i, 7k, 7l vorgesehen. Alternativ kann durch Betätigung des Papierkorbs 24 eine markierte Kachel vollständig gelöscht werden, im Ansprechen worauf eine ehemals benachbarte Kachel deren Bildschirmfläche zusätzlich einnimmt.

Figur 16 zeigt eine Bildschirmansicht in einem Konfigurationsmodus eines Ausführungsbeispiels einer Anwenderschnittstelle gemäß der vorliegenden Erfindung, in welchem detaillierte Einstellungen zu den Funktionsumfängen bzw. Inhalten einer betrachteten Kachel ausgewählt und angepasst werden können. Im Beispiel ist die Kachel 7f' ausgewählt, während die Kacheln 7b', 7d', 7m keinen Eingabefokus und keinen Inhalt aufweisen. Symbole auf den Kacheln 7b', 7d', 7m' zeigen an, dass durch eine Tippgeste auf die jeweilige Kachel die ausgewählte Kachel 7f' deren Fläche durch eine Fusion zusätzlich verwenden kann. Entsprechend den Plus-Symbolen auf den Kacheln 7b', 7d', 7m kann entweder eine in horizontaler Richtung neben der Kachel 7f' und/oder in vertikaler Richtung unterhalb der Kachel 7f' befindliche Bildschirmfläche zusätzlich zur Anzeige der Klimaeinstellung (aktueller Funktionsumfang der Kachel 7f') angezeigt werden. In der rechten Bildschirmhälfte ist ein Einstellmenü 25 eingeblendet, in welchem lediglich schematisch drei unterschiedliche Einstellungen 26a, 26b, 26c für die Kachel 7f' gewählt werden können. Im Beispiel sind die oberen beiden Einstellungen 26a, 26b, nicht jedoch die Einstellung 26c gewählt. Das Einstellungsmenü 25 kann über eine erste Schaltfläche 27a ohne Übernahme der Änderungen oder über eine Schaltfläche 27b unter Übernahme der Änderungen verlassen werden.

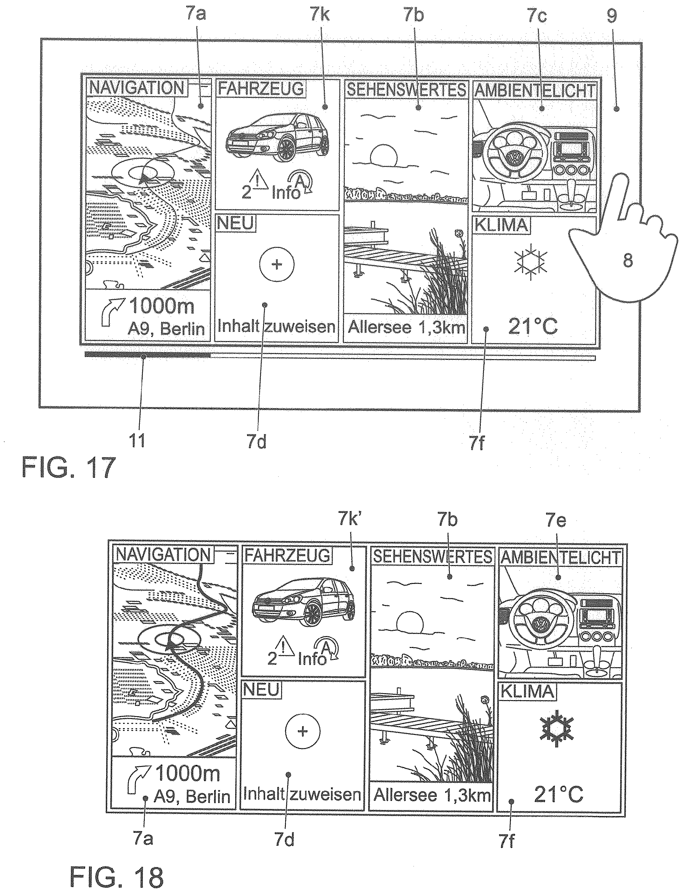

Figur 17 zeigt eine Tippgeste der Hand 8 eines Anwenders auf den Rahmen 9 eines im Konfigurationsmodus befindlichen Homescreens, im Ansprechen worauf der Konfigurationsmodus verlassen wird. Dies kann beispielsweise durch eine in Figur 4 dargestellte Animation (insbesondere in umgekehrter Richtung) erfolgen.

Figur 18 zeigt das Resultat des in Figur 17 eingeleiteten Verlassens des Konfigurationsmodus. Es werden die beispielsweise in Figur 9 dargestellten Kacheln 7a, 7b, 7c, 7d, 7f sowie eine neu hinzugekommene Kachel 7k' angezeigt. Der Rand 9 hat sich auf die ursprüngliche Breite verjüngt bzw. ist verschwunden. Ebenso ist der Kontrast der auf den Kacheln dargestellten Piktogramme erhöht worden, wodurch dem Anwender veranschaulicht wird, dass der Konfigurationsmodus erfolgreich verlassen worden ist.

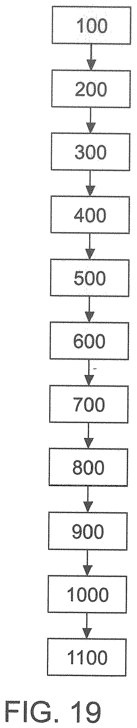

Figur 19 zeigt ein Flussdiagramm, veranschaulichend Schritte eines Ausführungsbeispiels eines erfindungsgemäßen Verfahrens. In Schritt 100 wird ein Konfigurationsmodus für eine Zuweisung eines Funktionsumfangs zu einer auf der Anzeigeeinheit dargestellten Kachel einer Vielzahl dargestellter Kacheln aufgerufen. Der Konfigurationsmodus dient der Anpassung beispielsweise eines Homescreens an die individuellen Bedürfnisse eines Anwenders. In Schritt 200 empfängt eine Eingabeeinheit der Anwenderschnittstelle eine vierte Anwendereingabe, im Ansprechen worauf in Schritt 300 die erste Vielzahl erster Bedienflächen angezeigt wird. Die Bedienflächen dienen der graphischen Zuweisung eines Funktionsumfangs zu der interessierenden Kachel. In Schritt 400 erfolgt daher eine erste Anwendereingabe bezüglich der ersten Bedienfläche, was durch die Eingabeeinheit der Anwenderschnittstelle erkannt wird. Die erste Bedienfläche repräsentiert eine Hauptkategorie von Fahrzeugfunktionen, so dass im Ansprechen auf die erste Anwendereingabe in Schritt 500 zugehörige Unterkategorien in Form einer zweiten Vielzahl der ersten Bedienfläche thematisch zugeordneter zweiter Bedienflächen angezeigt wird. In Schritt 600 wählt der Anwender mittels einer zweiten Anwendereingabe bezüglich einer (ersten oder zweiten) Bedienfläche einen Funktionsumfang aus. Hierzu wird ein Signal der Eingabeeinheit von der Anwenderschnittstelle empfangen, um die zweite Anwendereingabe zu klassifizieren und dem Zuweisungsbefehl zuzuordnen. Im Ansprechen auf das Empfangen des Zuweisungsbefehls wird in Schritt 700 der mit der ersten Bedienfläche oder der zweiten Bedienfläche assoziierte Funktionsumfang zu der Kachel zugewiesen. Dies erfolgt beispielsweise durch eine Wischgeste, bei welcher der Anwender die betreffende Bedienfläche über die interessierende Kachel zieht. Um dem Anwender einen Eindruck davon zu verschaffen, auf welcher Position der ausgewählte Funktionsumfang bei einem Bestätigen des Zuweisungsbefehls angezeigt wird, wird in Schritt 800 die Position auf der Anzeigeeinheit, welcher der Funktionsumfang durch eine Bestätigung zugewiesen würde, gekennzeichnet. Dies kann beispielsweise durch Einfärben der betreffenden Kachel(n) oder durch Anpassen von Farbeinstellungen der betreffenden Position erfolgen. In Schritt 900 erfolgt eine dritte Anwendereingabe bezüglich der ersten Bedienfläche, da der Anwender die zum Vorschein gebrachten zweiten Bedienflächen nicht mehr benötigt. Im Ansprechen darauf wird die zweite Vielzahl der zweiten Bedienflächen in Schritt 1000 verborgen. Dies kann beispielsweise durch eine Tippgeste auf einen Anfasser auf einer Bedienfläche, welche den zweiten Bedienflächen zugeordnet ist, erfolgen. Alternativ oder zusätzlich kann eine sog. pinch-Geste ausgeführt werden, welche die erste Bedienfläche und mindestens eine zweite ihr zugeordnete Bedienfläche aufeinander zubewegt. Anschließend erfolgt in Schritt 1100 ein Verlassen des Konfigurationsmodus, in dem der Anwender einen außerhalb der Kacheln angeordneten Rand antippt, welcher anschließend verschwindet und Platz für eine vergrößerte Darstellung der Kacheln macht.

Auch wenn die erfindungsgemäßen Aspekte und vorteilhaften Ausführungsformen anhand der in Verbindung mit den beigefügten Zeichnungsfiguren erläuterten Ausführungsbeispiele im Detail beschrieben worden sind, sind für den Fachmann Modifikationen und Kombinationen von Merkmalen der dargestellten Ausführungsbeispiele möglich, ohne den Bereich der vorliegenden Erfindung zu verlassen, deren Schutzbereich durch die beigefügten Ansprüche definiert wird.

### Bezugszeichenliste

- 1: Anwenderschnittstelle
- 2: Bildschirm
- 3: Verarbeitungseinheit
- 4: berührungsempfindliche, transparente Oberfläche
- 5: Datenspeicher
- 7: Kacheln
- 8: Hand
- 9: Rand
- 10: PKW
- 11: Scroll-Leiste
- 12: Vielzahl erster Bedienflächen
- 13-16: erste Bedienflächen
- 17: Longpress-Indikator
- 18: Anfasser
- 19: Verschiebeindikator
- 20: Tablet-PC
- 21: Verschiebeindikator
- 22: Randbereich
- 23: Schaltfläche
- 24: Papierkorb
- 25: Einstellungsmenü
- 26a-26c: Einstellungen
- 27a,b: Schaltflächen
- 100-1100: Verfahrensschritte
- P: Wischgeste

## Patentansprüche

1. Verfahren zur Anpassung einer Ansicht auf einer Anzeigeeinheit (2) einer Anwenderschnittstelle (1) umfassend die Schritte:
- Aufrufen (100) eines Konfigurationsmodus für eine Zuweisung eines Funktionsumfangs zu einer auf der Anzeigeeinheit (2) dargestellten Kachel (7) einer Vielzahl dargestellter Kacheln (7),
- Anzeigen (300) einer ersten Vielzahl (12) erster Bedienflächen (13, 14, 15, 16) repräsentierend einen jeweiligen Funktionsumfang,
- Empfangen (400) einer ersten Anwendereingabe bezüglich der ersten Bedienfläche (13, 14) und im Ansprechen darauf,
- Anzeigen (500) einer zweiten Vielzahl der ersten Bedienfläche (13, 14) thematisch zugeordneter zweiter Bedienflächen (13a, 13b; 14a, 14b, 14c, 14d, 14e).

2. Verfahren nach Anspruch 1 weiter umfassend den Schritt:
- Empfangen (600) einer zweiten Anwendereingabe (P) bezüglich einer ersten Bedienfläche (13, 14, 15, 16) oder einer zweiten Bedienfläche (13a, 13b; 14a, 14b, 14c, 14d, 14e) und im Ansprechen darauf
- Zuweisen (700) des der ersten Bedienfläche oder der zweiten Bedienfläche (13a) zugeordneten Funktionsumfangs zu der Kachel (7).

3. Verfahren nach Anspruch 2 weiter umfassend im Ansprechen auf das Empfangen (600) der zweiten Anwendereingabe (P) bezüglich der ersten Bedienfläche oder der zweiten Bedienfläche (13a) zur Zuweisung des Funktionsumfangs und
- Kennzeichnen (800) einer Position auf der Anzeigeeinheit (2), welcher der Funktionsumfang durch eine Bestätigung zugewiesen würde.

4. Verfahren nach Anspruch 3, wobei die Position eine Kachel (7g) und/oder eine Vielzahl zueinander benachbarter Kacheln (7g, 7h) umfasst.

5. Verfahren nach einem der Ansprüche 3 oder 4, wobei das Kennzeichnen (800) ein
- Einfärben der Position mit einer teilweise transparenten Farbe und/oder
- Umranden der Position mit einem Rahmen und/oder
- ein Anpassen von Farbeinstellungen der Position umfasst.

6. Verfahren nach einem der vorstehenden Ansprüche, wobei die erste Anwendereingabe und/oder die zweite Anwendereingabe (P)
- eine Tippgeste, und/oder
- eine "Ziehen und Fallenlassen"-Geste, und/oder
- eine Zwei-Finger-Zoom-Geste ist bzw. sind.

7. Verfahren nach Anspruch 1 oder 2 weiter umfassend den Schritt:
- Empfangen (900) einer dritten Anwendereingabe bezüglich der ersten Bedienfläche (13, 14) und im Ansprechen darauf,
- Verbergen (1000) der zweiten Vielzahl der ersten Bedienfläche thematisch zugeordneter zweiter Bedienflächen (13a, 13b; 14a, 14b, 14c, 14d, 14e).

8. Verfahren nach einem der vorstehenden Ansprüche weiter umfassend
- Empfangen (200) einer vierten Anwendereingabe (P), und im Ansprechen darauf,
- Anzeigen (300) der ersten Vielzahl (12) erster Bedienflächen (13, 14, 15, 16).

9. Verfahren nach Anspruch 8, wobei
- die vierte Anwendereingabe (P) eine Langdruck-Geste bezüglich der ersten Kachel (7) umfasst oder eine, insbesondere vertikale, bevorzugt von einem Rand der Anzeigeeinheit (2) startende, Wischgeste umfasst.

10. Verfahren nach einem der vorstehenden Ansprüche, wobei
- die Kachel (7) Bestandteil eines Homescreens ist, und/oder
- die erste Vielzahl (12) Bedienflächen (13, 14, 15, 16) jeweilige Funktionsumfänge aus den Bereichen
- Musikwiedergabe, und/oder
- Routenführung, und/oder
- Klimabedienung, und/oder
- Informationswiedergabe zu Reisestatistiken repräsentieren.

11. Anwenderschnittstelle umfassend
- eine Anzeigeeinheit (2),
- eine Verarbeitungseinheit (3), und
- Eingabeeinheit (4) zur Entgegennahme von Anwendereingaben (P), wobei die Verarbeitungseinheit (3) die Anwenderschnittstelle (1) zur Verwendung in einem Verfahren nach einem der vorstehenden Ansprüche einrichtet.

12. Anwenderschnittstelle nach Anspruch 11, welche eingerichtet ist, dauerhaft in ein Fortbewegungsmittel (10) integriert zu werden und drahtgebunden Sensorinformationen des Fortbewegungsmittels (10) darzustellen.

13. Computerlesbares Medium umfassend Computerprogrammcode oder Signalfolge repräsentierend Computerprogrammcode, welcher, wenn er auf einer Verarbeitungseinheit (3) einer Anwenderschnittstelle (1) nach Anspruch 11 oder 12 ausgeführt wird, die Anwenderschnittstelle (1) zur Verwendung in einem Verfahren nach einem der Ansprüche 1 bis 10 einrichtet.

14. Anwenderendgerät, insbesondere Drahtloskommunikationsgerät, umfassend eine Anwenderschnittstelle (1) nach einem der Ansprüche 11 oder 12.

15. Fortbewegungsmittel, insbesondere Fahrzeug (10), umfassend eine Anwenderschnittstelle (1) nach einem der Ansprüche 11 oder 12.

## Claims

1. Method for adapting a view on a display unit (2) of a user interface (1), comprising the steps of:
- calling up (100) a configuration mode for allocating a range of functions to one tile (7) of a multiplicity of displayed tiles (7), which is displayed on the display unit (2),
- displaying (300) a first multiplicity (12) of first operating areas (13, 14, 15, 16) representing a respective range of functions,
- receiving (400) a first user input for the first operating area (13, 14) and, in response thereto,
- displaying (500) a second multiplicity of second operating areas (13a, 13b; 14a, 14b, 14c, 14d, 14e) thematically associated with the first operating area (13, 14).

2. Method according to Claim 1, also comprising the step of:
- receiving (600) a second user input (P) for a first operating area (13, 14, 15, 16) or a second operating area (13a, 13b; 14a, 14b, 14c, 14d, 14e) and, in response thereto,
- allocating (700) the range of functions associated with the first operating area or second operating area (13a) to the tile (7).

3. Method according to Claim 2, also comprising, in response to the reception (600) of the second user input (P) for the first operating area or the second operating area (13a) for the purpose of allocating the range of functions,
- marking (800) a position to which the range of functions would be allocated by a confirmation on the display unit (2).

4. Method according to Claim 3, wherein the position comprises a tile (7g) and/or a multiplicity of tiles (7g, 7h) which are adjacent to one another.

5. Method according to either of Claims 3 and 4, wherein the marking (800) comprises
- coloring the position with a partially transparent color and/or
- edging the position with a frame and/or
- adapting color settings of the position.

6. Method according to one of the preceding claims, wherein the first user input and/or the second user input (P) is/are
- a tapping gesture and/or
- a "drag and drop" gesture and/or
- a two-finger zoom gesture.

7. Method according to Claim 1 or 2, also comprising the step of:
- receiving (900) a third user input for the first operating area (13, 14) and, in response thereto,
- hiding (1000) the second multiplicity of second operating areas (13a, 13b; 14a, 14b, 14c, 14d, 14e) thematically associated with the first operating area.

8. Method according to one of the preceding claims, also comprising
- receiving (200) a fourth user input (P) and, in response thereto,
- displaying (300) the first multiplicity (12) of first operating areas (13, 14, 15, 16).

9. Method according to Claim 8, wherein
- the fourth user input (P) comprises a longpress gesture with respect to the first tile (7) or comprises a swipe gesture, in particular a vertical swipe gesture, which preferably starts from an edge of the display unit (2).

10. Method according to one of the preceding claims, wherein
- the tile (7) is part of a home screen and/or
- the first multiplicity (12) of operating areas (13, 14, 15, 16) represent respective ranges of functions from the areas of
- music playback and/or
- routing and/or
- air-conditioning control and/or
- representation of information relating to trip statistics.

11. User interface comprising
- a display unit (2),
- a processing unit (3), and
- an input unit (4) for receiving user inputs (P), wherein the processing unit (3) sets up the user interface (1) for use in a method according to one of the preceding claims.

12. User interface according to Claim 11, which is set up to be permanently integrated in a means of transport (10) and to display sensor information from the means of transport (10) in a wired manner.

13. Computer-readable medium comprising computer program code or a signal sequence representing computer program code which, when executed on a processing unit (3) of a user interface (1) according to Claim 11 or 12, sets up the user interface (1) for use in a method according to one of Claims 1 to 10.

14. User terminal, in particular wireless communication device, comprising a user interface (1) according to either of Claims 11 and 12.

15. Means of transport, in particular vehicle (10), comprising a user interface (1) according to either of Claims 11 and 12.

## Revendications

1. Procédé pour adopter une vue sur une unité d'affichage (2) d'une interface utilisateur (1) comprenant les étapes consistant à :
- appeler (100) un module de configuration destiné à affecter une gamme de fonctions à au moins un panneau (7) d'une pluralité de panneaux (7) représentés sur l'unité d'affichage (2),
- afficher (300) une première pluralité (12) de surfaces de commande (13, 14, 15, 16) représentant une gamme respective de fonctions,
- recevoir (400) une première entrée d'utilisateur sur la première surface de commande (13, 14) et, en réponse à celle-ci,
- afficher (500) une seconde pluralité de secondes surfaces de commande (13a, 13b ; 14a, 14b, 14c, 14d, 14e) thématiquement associées à la première surface de commande (13, 14).

2. Procédé selon la revendication 1, comprenant en outre l'étape consistant à :
- recevoir (600) une seconde entrée d'utilisateur (P) sur une première surface de commande (13, 14, 15, 16) ou une seconde surface de commande (13a, 13b ; 14a, 14b, 14c, 14d, 14e) et, en réponse à celle-ci :
- affecter (700) la gamme de fonctions associée à la première surface de commande ou à la seconde surface de commande (13a) au panneau (7).

3. Procédé selon la revendication 2, consistant en outre, en réponse à la réception (600) de la seconde entrée d'utilisateur (P) sur la première surface de commande ou la seconde surface de commande (13a), à affecter la gamme de fonctions et
- identifier (800), sur l'unité d'affichage (2), une position qui est affectée à la gamme de fonctions par un actionnement.

4. Procédé selon la revendication 3, dans lequel la position comprend un panneau (7g) et/ou une pluralité de panneaux (7g, 7h) voisins les uns des autres.

5. Procédé selon l'une quelconque des revendications 3 ou 4, dans lequel l'identification (800) consiste à :
- colorer la position en utilisant une couleur partiellement transparente et/ou
- entourer la position avec un cadre et/ou
- adapter les réglages de couleur à la position.

6. Procédé selon l'une quelconque des revendications précédentes, dans lequel la première entrée d'utilisateur et/ou la seconde entrée d'utilisateur (P) est/sont :
- un geste de d'appui, et/ou
- un geste de glisser-déposer, et/ou
- un geste de zoom à deux doigts, etc.

7. Procédé selon la revendication 1 ou 2, comprenant en outre les étapes consistant à :
- recevoir (900) une troisième entrée d'utilisateur sur la première surface de commande (13, 14) et, en réponse à celle-ci :
- masquer (1000) la deuxième pluralité de deuxièmes surfaces de commande (13a, 13b ; 14a, 14b, 14c, 14d, 14e) associées thématiquement à la première surface de commande.

8. Procédé selon l'une quelconque des revendications précédentes, consistant en outre à :
- recevoir (200) une quatrième entrée d'utilisateur (P) et, en réponse à celle-ci,
- afficher (300) la première pluralité (12) de premières surfaces de commande (13, 14, 15, 16).

9. Procédé selon la revendication 8, dans lequel
- la quatrième entrée d'utilisateur (P) comprend un geste de pression prolongée sur le premier panneau (7) ou un geste de glissement, notamment vertical, partant de préférence d'un bord de l'unité d'affichage (2).

10. Procédé selon l'une quelconque des revendications précédentes, dans lequel
- le panneau (7) fait partie d'un écran d'accueil, et/ou
- la première pluralité (12) de surfaces de commande (13, 14, 15, 16) représente des gammes de fonctions respectives appartenant aux domaines suivants :
- reproduction musicale, et/ou
- guidage routier, et/ou
- commande de climatisation, et/ou
- reproduction d'informations à des fins de statistiques de voyage.

11. Interface utilisateur comprenant :
- une unité d'affichage (2),
- une unité de traitement (3), et
- une unité d'entrée (4) permettant de recevoir des entrées d'utilisateurs (P), dans lequel l'unité de traitement (3) crée l'interface utilisateur (1) pour une utilisation dans un procédé selon l'une quelconque des revendications précédentes.

12. Interface utilisateur selon la revendication 11, conçu pour être intégré de manière permanente dans un moyen de transport (10) pour représenter des informations de capteurs du moyen de transport (10) transmises de manière câblée.

13. Support lisible par ordinateur comprenant un code de programme d'ordinateur ou une séquence de signaux représentant un code de programme d'ordinateur qui, lorsqu'il est exécuté sur une unité de traitement (3) d'une interface utilisateur (1) selon la revendication 11 ou 12, crée l'interface utilisateur (1) destinée à être utilisé dans un procédé selon d'une quelconque des revendications 1 à 10.

14. Terminal utilisateur, notamment appareil de communication sans fil, comprenant une interface utilisateur (1) selon l'une quelconque des revendications 11 ou 12.

15. Moyen de transport, notamment véhicule (10), comprenant une interface utilisateur (1) selon l'une quelconque des revendications 11 ou 12.
